# EUROPEAN PATENT SPECIFICATION

(11) **EP 0 406 610 B1**
(45) Date of publication and mention of the grant of the patent: **06.09.1995**
(21) Application number: 90111455.3
(22) Date of filing: 18.06.1990
(51) Int. Cl.: G06K 7/06, G06K 19/077

(54) **Static electricity eliminating structure for electronic devices**
Statische Elektrizität ausschaltende Struktur für elektronische Vorrichtungen
Structure éliminant l'électricité statique pour des dispositifs électroniques

(30) Priority: 05.07.1989 JP 171832/89
(43) Date of publication of application: 09.01.1991
(73) Proprietor: SEIKO EPSON CORPORATION, Shinjuku-ku Tokyo-to (JP)
(72) Inventor: Hayashi, Yoshimitsu, Suwa-shi, Nagano-ken (JP)
(74) Representative: Hoffmann, Eckart, Dipl.-Ing.

(56) References cited:
- EP-A- 0 228 278
- FR-A- 2 533 047

## Description

The present invention relates to a static electricity eliminating structure for an electronic device, especially a memory card. More particularly, the present invention relates to a static electricity eliminating structure designed to prevent destruction due to static electricity of an electronic device and a main device to which the electronic device is connected.

In a typical conventional static electricity eliminating structure for a memory card, static electricity that is generated on the surface of the memory card is drained away to a circuit board which is incorporated in the memory card and which has input/output terminals and also has an IC chip mounted thereon, and the static electricity is than passed to some of connector terminals to which the input/output terminals of the memory card are connected. In this case, however, the static electricity flows through the circuit module on the circuit board in the memory card and it is therefore only possible to obtain a static withstand voltage of about 10 kV.

To increase the static withstand voltage a static electricity eliminating structure for a memory card has been provided, which will be explained in detail later with reference to Figs. 4 to 7 and which is described in EP-A-0 328 077, cited under Art. 54(3). As will be understood from that detailed description this prior art suffers from the problem that a sufficient increase of the static withstand voltage is not possible.

A static electricity eliminating structure according to the precharacterizing clause of claim 1 is disclosed in the document EP-A-0 228 278. In this prior art, the casing of the electronic device and the casing of the connector are contacted to each other by a static electricity eliminating terminal.

It is accordingly an object of the present invention to provide a static electricity eliminating structure for an electronic device, especially a memory card, which has an increased static withstand voltage and is capable of preventing destruction due to static electricity of the electronic device and the main device.

This object is achieved with an electricity eliminating structure as claimed in claim 1.

According to this structure, a metallic surface portion is provided on the surface of either the upper or lower panel and electrically connected to the upper or lower panel, and the connector of the main device is provided with a resilient static eliminating terminal which is longer than the connector terminals of the connector and comes into contact at its distal end with the metallic surface portion of the electronic device. Accordingly, when the electronic device, for instance a memory card, is connected to the connector, the distal end of the static eliminating terminal of the connector is brought into press-contact with said metallic surface portion before the input/output terminals of the electronic device are connected to the connector terminals of the connector. Since, at this time, a satisfactorily high contact pressure and a satisfactorily large contact area are obtained, the contact resistance is small and the static electricity that is generated on the electronic device is drained away to the frame ground of the main device from the metallic surface portion through the static eliminating terminal, thereby effecting elimination of the static electricity.

An embodiment of the present invention will be described hereinafter with reference to the drawings, in which
- Fig. 1: is a perspective view showing one embodiment of the present invention,
- Fig. 2: is a sectional view showing the embodiment just before the memory card is connected to the connector,
- Fig. 3: is a sectional view showing the memory card as it is connected to the connector,
- Fig. 4: is a perspective view showing a memory card and a connector which constitute in combination a conventional static electricity eliminating structure,
- Fig. 5: is a sectional view of the memory card of Fig. 4,
- Fig. 6: is a sectional view of the memory card of Fig. 4 as it is connected to the connector, and
- Fig. 7: is another sectional view of the conventional memory card static electricity eliminating structure.

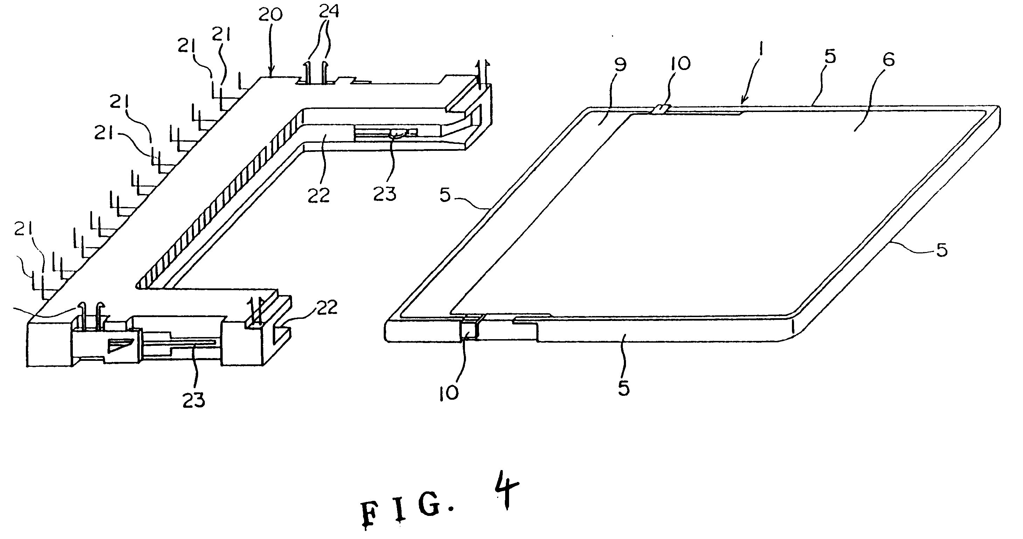

In order to facilitate the understanding of the present invention a conventional static electricity eliminating structure for a memory card will first be explained with reference to Figs. 4 to 7.

In these figures, reference numeral 1 denotes a memory card, 2 a circuit board incorporated in the memory card 1, 3 input/output terminals of a circuit module provided on the circuit board 2, 4 IC chips mounted on the circuit board 2, 5 resin spacers and 6 and 7 an upper and a lower metallic panel having printed surfaces and sandwiching the circuit board 2 therebetween through the insulating spacers 5.

Conductor members 8 electrically connect together the upper and lower panels 6 and 7 and are internally connected to a ground terminal of the circuit board 2. A shutter plate 9 is provided at a window portion of the upper panel 6, the shutter plate 9 being electrically connected to the upper panel 6. Static electricity eliminating pieces 10 are provided on both sides, respectively, of the shutter plate 9 and project from the side surfaces of the upper panel 6. A spring 11 constantly biases the shutter plate 9 in a direction to close the shutter plate 9.

Reference numeral 20 denotes a U-shaped connector 20 to which the memory card 1 is connected. A plurality of connector terminal 21 partially project from the outer peripheral surface of the connector 20. A card guide groove 22 is provided in the inner peripheral surface of the connector 20. Static electricity eliminating terminal pieces 23 are provided at both end portions, respectively, of the connector 20, the terminal pieces 23 projecting into the card guide groove 22. Static electricity eliminating terminals 24 project from the outer peripheral surface of the connector 20, the terminals 24 being connected to the respective terminal pieces 23.

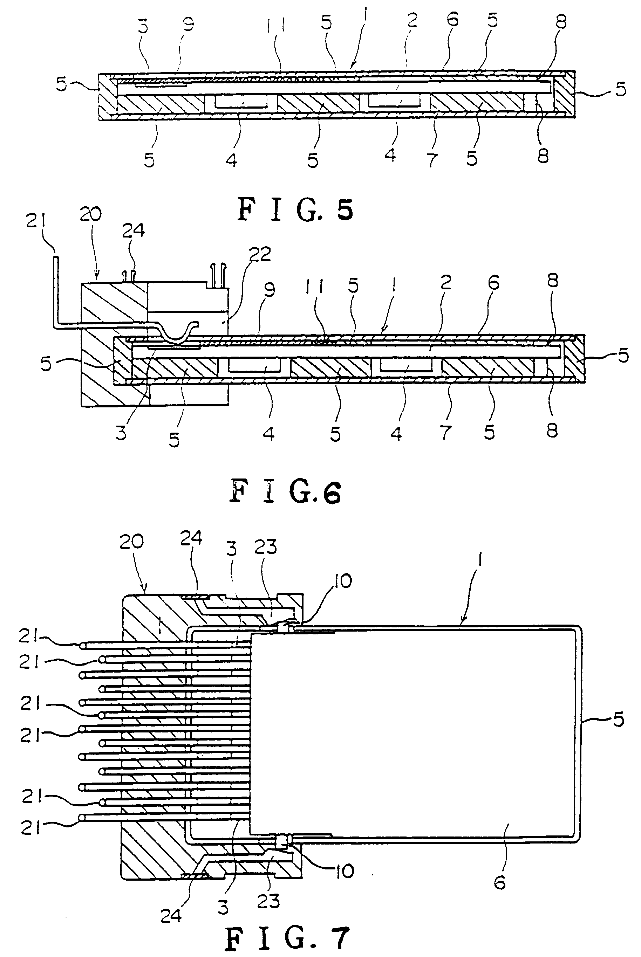

In the memory card static electricity eliminating structure having the above-described arrangement, for connecting memory card 1 to connector 20 that is connected to a main device, the memory card 1 is inserted, at the side thereof where the shutter plate 9 is provided, into the card guide groove 22 in the connector 20. At this time, the static electricity eliminating pieces 10 provided on the shutter plate 9 abut against the terminal pieces 23 projecting into the card guide groove 22. Accordingly, as the memory card 1 is further inserted, the shutter plate 9 forming a unit with the pieces 10 is opened against the biasing force from the spring 11. Since the input/output terminals 3 are disposed directly below the shutter plate 9, the connector terminals 21 of the connector 20 are connected to the input/output terminals, as shown in Figs. 6 and 7. At this time, the pieces 10 provided on the shutter plate 9 remain in press-contact with the terminal pieces 23 of the connector 20, as shown in Fig. 7. Accordingly, static electricity that is generated on the memory card 1 flows, when the memory card 1 is connected to the connector 20, from the pieces 10 which are electrically connected to the upper panel 6 of the memory card 1 to the terminal pieces 23 of the connector 20 and further flows from the terminal pieces 23 to the frame ground of the main device that is connected to the terminals 24. In this way the static electricity is eliminated.

In the conventional memory card static electricity eliminating structure described above, the static electricity eliminating pieces 10 are provided on both sides of the shutter plate 9 which opens and closes the input/output terminals 3 of the memory card 1, in such a manner that the pieces 10 project from the side surfaces of the upper panel 6, while the connector 20 is provided with static electricity eliminating terminal pieces 23 projecting into the card guide groove 22 into which the memory card 1 is inserted. Therefore, when the memory card 1 is connected to the connector 20, the pieces 10 are slid and brought into presscontact with the terminal pieces 23. However, since the area of contact between each piece 10 and the corresponding terminal piece 23 is small, the contact resistance between the pieces 10 of the memory card and the terminal pieces 23 of the connector 20 exceeds 1 kΩ, whereas the contact resistance should preferably be held down to 200 Ω or less. For this reason, the prior art suffers from the problem that it is impossible to achieve a marked increase in the static withstand voltage.

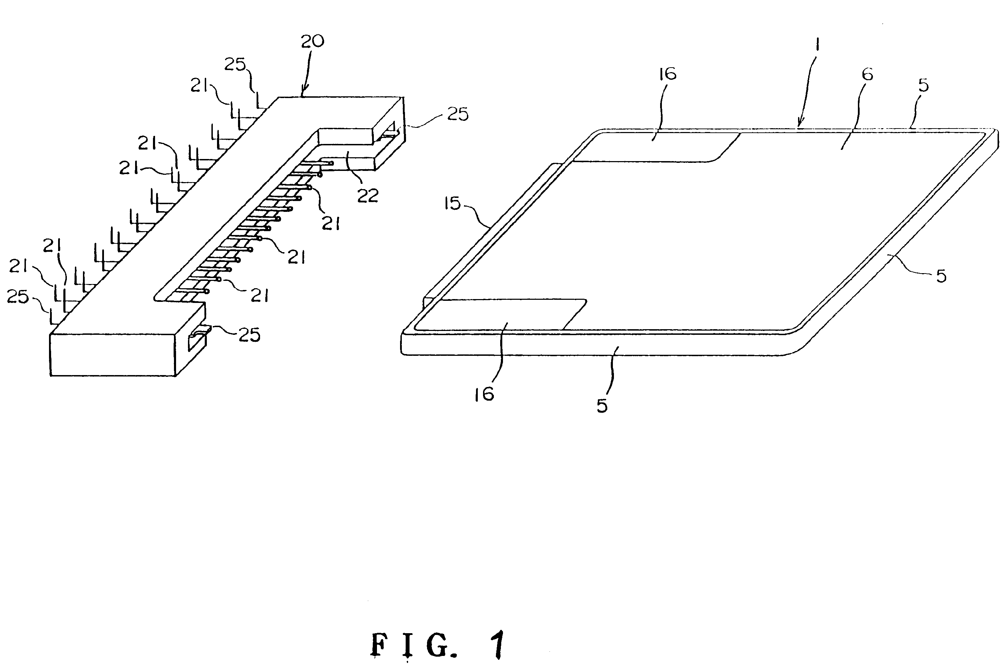

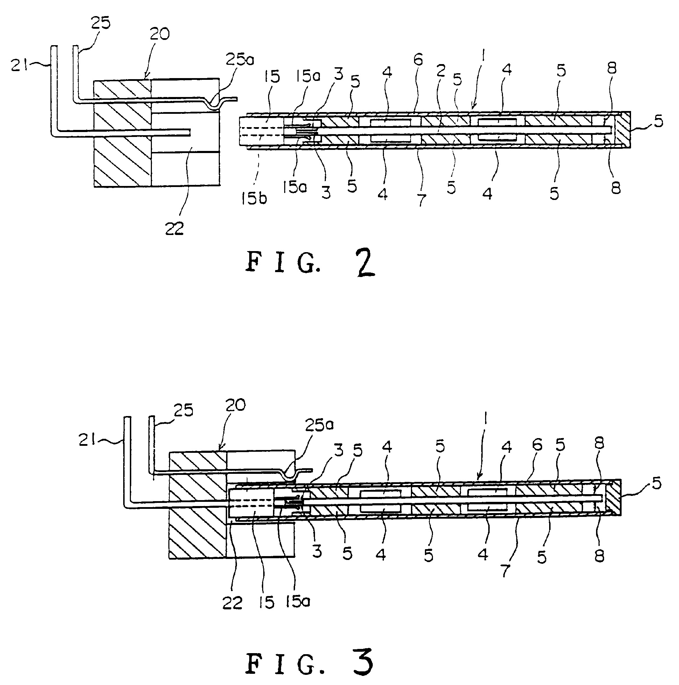

With reference to Figs. 1 to 3 an embodiment of the present invention will now be described. In these figures, arrangements which are substantially the same as those in the above described prior art are denoted by the same reference numerals and a repeated description thereof will be omitted.

Reference numeral 15 denotes a socket which is provided on the end portion of the memory card 1 used here as an example of an electronic device. The memory card 1 is to be inserted into the connector 20. The socket 15 is interposed between the end portions of the upper panel 6 and the lower panel 7 which are inserted into the connector 20. The socket 15 has pairs of male terminals 15a which are connected to the input/output terminals 3 provided on the circuit board 2. The socket 15 further has female terminals 15b built therein. A pair of rectangular metallic surface portions 16 are provided on the surfaces of the side portions at that end of the upper panel 6 which is to be inserted into the connector 20, the panel 6 having a printed surface. Formation of the metallic surface portions 16 may be effected by providing a printed surface on the plain surface of the upper panel 6 with a paint in such a manner that regions which are defined as the metallic surface portions 16 are left unpainted, or by applying an electrically conductive paint to regions of the plain surface of the upper panel 6 which are defined as the metallic surface portions 16 and then applying a printing paint to the rest of the plain surface. It is, as a matter of course, possible to obtain the same advantageous effects by forming the metallic surface portions 16 by means of plating with nickel, gold etc.

The connector terminals 21 of the connector 20 are formed in a pin-shaped configuration. A pair of resilient static electricity eliminating terminals 25 are provided on both end portions, respectively, of the connector 20 in parallel to the connector terminals 21, the static electricity eliminating terminals 25 being longer than the connector terminals 21. Each static electricity eliminating terminal 25 has a curved distal end portion 25a.

In the memory card static electricity eliminating structure having the arrangement described above, when the memory card 1 is connected to the connector 20, since the static electricity eliminating terminals 25 provided on the connector 20 are longer than the connector terminals 21, the curved distal end portions 25a of the terminals 25 come into press-contact with the metallic surface portions 16 on the upper panel 6 of the memory card 1 before the female terminals 15b of the socket 15, which are connected to the input/output terminals 3 of the memory card 1, come into contact with the connector terminals 21 of the connector 20. With this press-contact state being maintained, the connector terminals 21 of the connector 20 and the female terminals 15b in the socket 15 of the memory card 1 are connected to each other. Accordingly, when the static electricity eliminating terminals 25 of the connector 20 come into press-contact with the metallic surface portions 16 of the memory card 1, the static electricity generated on the memory card 1 flows from the metallic surface portions 16 to the terminals 25 and from there to the frame ground of the main device to which the terminals 25 are connected. Thereby, the elimination of the static electricity is effected. At this time, since the terminals 25 of the connector 20 are resilient and their distal end portions 25a are curved, the terminals 25 are brought into contact with the metallic surface portions 16 with a sufficiently high contact pressure. Since the metallic surface portions 16 of the memory card 1 are sufficiently wide to enable the terminals 25 to move relative to the metallic surface portions 16 while keeping contact with them, it is possible to obtain a wide contact area between each of the static electricity eliminating terminals 25 and the corresponding metallic surface portion 16. Since the terminals 25 rub against the metallic surface portions 16, any dirt or other contact impairing matter on the metallic surface portions 16 will be scraped off to ensure a reliable contact. Thus, the contact resistance is 200 Ω or less and a satisfactorily high static withstand voltage is obtained. Accordingly, the static electricity that is generated on the memory card 1 is effectively and reliably eliminated through the metallic surface portions 16 and the static electricity eliminating terminals 25. In addition, since the static electricity eliminating structure has a satisfactorily high static withstand voltage, it is possible to prevent destruction due to static electricity of the memory card 1 and the main device.

Although in the foregoing embodiment the metallic surface portions 16 are provided on the upper panel 6 of the memory card 1, the metallic surface portions 16 may be provided on the lower panel 7 or on the sides of the memory card 1. In such an alternative arrangement, the installation positions of the static electricity eliminating terminals 25 which are brought into contact with the metallic surface portions 16 are, needless to say, required to be properly changed in correspondence with the positions of the metallic surface portions 16.

As has been described above, in the present invention, metallic surface portions are provided on the surface of either the upper or lower panel and electrically connected to the upper or lower panel, and the connector is provided with resilient static electricity eliminating terminals which are longer than connector terminals of the connector and come into contact at their distal ends with the metallic surface portions of the memory card. Thus, when the memory card is connected to the connector the distal ends of the static electricity eliminating terminals of the connector are brought into press-contact with the metallic surface portions of the memory card before the input/output terminals of the memory card are connected to the connector terminals of the connector, thereby enabling a satisfactorily high contact pressure and a satisfactorily large contact area to be obtained. Accordingly, the contact resistance between the metallic surface portions of the memory card and the static electricity eliminating terminals of the connector is small and a satisfactorily high static withstand voltage is obtained. The static electricity that is generated on the memory card is drained away to the frame ground of the main device from the metallic surface portions through the static electricity eliminating terminals, thereby enabling reliable elimination of the static electricity. In addition, since the static electricity eliminating structure has a satisfactorily high static withstand voltage, it is possible to prevent destruction due to static electricity of the memory card and the main device.

## Claims

1. A static electricity eliminating structure for an electronic device to be connected to a main device, comprising:
said electronic device (1) including a circuit board (2) having input/output terminals (3) and an IC chip (4) mounted thereon, a casing including an upper and a lower panel (6,7) sandwiching said circuit board (2) therebetween, said electronic device (1) further including a contact surface portion (16) provided on the surface of either said upper or lower panel (6,7), and
a connector (20) of a main device to which said electronic device (1) is connected, said connector having a resilient static electricity eliminating terminal (25) which is longer than connector terminals (21) of said connector and comes into contact at its distal end with said contact surface portion (16) of the electronic device (1), so that when said electronic device is connected to said connector, the distal end of said static electricity eliminating terminal (25) is brought into press-contact with said contact surface portion (16) of said electronic device (1),
characterized in that said upper and said lower panel (6, 7) are metallic and sandwich said circuit board (2) therebetween through insulating spacers (5), said panels having printing surfaces and being electrically connected together through a build-in conductor member (8), and said contact surface portion (16) being a metallic surface portion electrically connected to said upper or lower panel (6, 7).

2. The structure according to claim 1, wherein said electronic device (1) is a memory card.

3. The structure according to claim 1 or 2, wherein a plurality of metallic surface portions (16) are provided on said electronic device (1), said connector (20) having a corresponding plurality of static electricity eliminating terminals (25).

4. The structure according to any of the preceding claims, wherein said metallic surface portion (16) and said static electricity eliminating terminal (25) are arranged in such a manner that a contact portion (25a) of said static electricity eliminating terminal (25) slides on said metallic surface portion (16), when said electronic device (1) is inserted into the connector (20).

## Patentansprüche

1. Struktur zur Ableitung statischer Elektrizität für eine mit einer Hauptvorrichtung zu verbindende elektronische Vorrichtung, umfassend:
die elektronische Vorrichtung (1) enthaltend eine Leiterplatte (2) mit Eingangs/Ausgangs-Anschlüssen (3) und einem darauf montierten IC-Chip (4), ein Gehäuse, das eine obere und eine untere Platte (6, 7), die die Leiterplatte (2) zwischen sich einschließen, enthält, wobei die elektronische Vorrichtung (1) ferner einen Kontaktoberflächenabschnitt (16) aufweist, der an der Oberfläche entweder der oberen oder der unteren Platte (6, 7) vorgesehen ist, und
einen Steckverbinder (20) einer Hauptvorrichtung, mit der die elektronische Vorrichtung (1) verbunden ist, wobei der Steckverbinder einen elastischen Anschluß (25) zur Ableitung statischer Elektrizität aufweist, der länger ist als die Steckverbinderanschlüsse (21) des Steckverbinders und an seinem entfernten Ende mit dem Kontaktoberflächenabschnitt (16) der elektronischen Vorrichtung (1) in Kontakt kommt, so daß, wenn die elektronische Vorrichtung mit dem Steckverbinder verbunden wird, das entfernte Ende des Anschlusses (25) zur Ableitung statischer Elektrizität mit dem Kontaktoberflächenabschnitt (16) der elektronischen Vorrichtung (1) in Druckkontakt gebracht wird,
dadurch gekennzeichnet, daß die obere und die untere Platte (6, 7) metallisch sind und die Leiterplatte (2) zwischen sich über isolierende Abstandshalter (5) einschließen, wobei die Platten Druckoberflächen aufweisen, und elektrisch miteinander über ein eingebautes Kontaktglied (8) verbunden sind, und daß der Kontaktoberflächenabschnitt (16) ein metallischer Oberflächenabschnitt ist, der elektrisch mit der oberen oder unteren Piatte (6, 7) verbunden ist.

2. Struktur nach Anspruch 1, wobei die elektronische Vorrichtung (1) eine Speicherkarte ist.

3. Struktur nach Anspruch 1 oder 2, wobei eine Vielzahl metallischer Oberflächenabschnitte (16) auf der elektronischen Vorrichtung (1) vorgesehen ist und der Steckverbinder (20) eine entsprechende Vielzahl von Anschlüssen (25) zur Ableitung statischer Elektrizität aufweist.

4. Struktur nach einem der vorhergehenden Ansprüche, wobei der metallische Oberflächenabschnitt (16) und der Anschluß (25) zur Ableitung statischer Elektrizität in solcher Weise angeordnet sind, daß ein Kontaktabschnitt (25a) des Anschlusses (25) zur Ableitung statischer Elektrizität auf dem metallischen Oberflächenabschnitt (16) gleitet, wenn die elektronische Vorrichtung (1) in den Steckverbinder (20) eingesteckt wird.

## Revendications

1. Une structure éliminant l'électricité statique pour un dispositif électronique à connecter à un dispositif principal, comprenant :
le dispositif électronique (1), qui comporte une plaquette de circuit (2) ayant des bornes d'entrée/sortie (3) et une puce de circuit intégré (4) montée sur cette plaquette, un boîtier comprenant une plaquette supérieure et une plaquette inférieure (6, 7) entre lesquelles la plaquette de circuit (2) est intercalée, ce dispositif électronique (1) comprenant en outre une partie de surface de contact (16) qui est prévue sur la surface de la plaquette supérieure ou de la plaquette inférieure (6, 7), et
un connecteur (20) d'un dispositif principal auquel le dispositif électronique (1) est connecté, ce connecteur ayant une borne d'élimination de l'électricité statique (25) flexible, qui est plus longue que des bornes de connecteur (21) du connecteur, et qui vient en contact à son extrémité distale avec la partie de surface de contact (16) du dispositif électronique (1), de façon que lorsque le dispositif électronique est connecté au connecteur, l'extrémité distale de la borne d'élimination de l'électricité statique (25) soit mise en contact, avec pression, avec la partie de surface de contact (16) du dispositif électronique (1),
caractérisée en ce que la plaquette supérieure et la plaquette inférieure (6, 7) sont métalliques et elles maintiennent entre elles la plaquette de circuit (2), avec interposition d'entretoises isolantes (5), les plaquettes supérieure et inférieure ayant des surfaces d'impression et étant connectées électriquement ensemble par l'intermédiaire d'une pièce conductrice (8) incorporée, et la partie de surface de contact (16) étant une partie de surface métallique qui est connectée électriquement à la plaquette supérieure ou inférieure (6, 7).

2. La structure selon la revendication 1, dans laquelle le dispositif électronique (1) est une carte à mémoire.

3. La structure selon la revendication 1 ou 2, dans laquelle un ensemble de parties de surface métalliques (16) sont prévues sur le dispositif électronique (1), le connecteur (20) ayant un ensemble correspondant de bornes d'élimination de l'électricité statique (25).

4. La structure selon l'une quelconque des revendications précédentes, dans laquelle la partie de surface métallique (16) et la borne d'élimination de l'électricité statique (25) sont disposées d'une manière telle qu'une partie de contact (25a) de la borne d'élimination de l'électricité statique (25) glisse sur la partie de surface métallique (16) lorsque le dispositif électronique (1) est introduit dans le connecteur (20).
